# EUROPEAN PATENT APPLICATION

(11) **EP 1 933 176 A1**
(43) Date of publication of application: **18.06.2008**
(21) Application number: 07122326.7
(22) Date of filing: 04.12.2007
(51) Int. Cl.: G02B 1/10, G02B 5/08, G01C 19/66, H01S 3/08

(54) **Laser mirror for a ring laser gyroscope**

(30) Priority: 12.12.2006 US 609849
(71) Applicant: Honeywell International Inc., Morristown, NJ 07962 (US)
(72) Inventor: Anderson, Carl David, Prior Lake, MN 55372 (US); Ramberg, Randy J., Roseville, MN 55113 (US)
(74) Representative: Buckley, Guy Julian

(57) **Abstract**

A laser mirror (100) for a ring laser gyroscope (RLG) includes an intermediate optical coating (118), positioned within approximately a mid portion of the laser mirror (100) for improving the performance of the RLG, and specifically for improving the reflectance of at least one wavelength emission. The properties of the intermediate optical coating (118) and its placement within the laser mirror results in a good reflection of a first predetermined wavelength emission wavelength, for example a 633 nanometer wavelength emission, and a poor reflection of a second predetermined wavelengtli emission, for example a 650 nanometer wavelength emission. In one embodiment, the intermediate optical coating (118) includes a half-wave or a multiple half-wave thickness and is made from Zirconium Oxide.

## Description

### BACKGROUND OF THE INVENTION

A ring laser gyroscope (RLG) is a device that measures angular rate by optical means. Two counter-rotating laser beams, formed within a resonate cavity, are detected and provide an accurate measure of angular rate. A typical laser gyroscope has a laser emission wavelength of 633 nanometers. A key component in this device is the quality of the laser mirrors or reflectors.

The laser mirrors used in ring laser gyroscope applications are commonly referred to as multilayer dielectric coated mirrors or multilayer high-reflectance coated mirrors. These mirrors are made by depositing, in an alternating manner, optical coatings that have different indices of refraction, preferably one optical coating has a high index of refraction material and the other optical coating has a low index of refraction.

As improvements have been made with the reflectance of these mirrors, a second laser emission wavelength of 650 nanometers has developed. The 650 nanometer line is an electronic Raman line that is pumped by the 633 nanometer line, which is the primary wavelength of the RLG. The 650 nanometer photon is created when a neon metastable interacts with a 633 nanometer photon. This interaction results in the metastable being promoted to a higher energy state and the photon being scattered at a lower energy (650 nanometers). This phenomenon of losing 633 nanometer photons in this manner degrades the RLG performance.

### SUMMARY OF THE INVENTION

According to at least one embodiment of the invention, a ring laser gyroscope (RLG) includes a laser mirror built-up with at least three different optical coating configurations. By way of example, a first optical coating and a second optical coating have the same physical thickness, but different indices of refraction. The first and second optical coatings are repeatedly deposited, one on top of the other, to form a first stack and a second stack. An intermediate optical coating with a multiple half-wave thickness is located between the first and the second stacks, and preferably apart from either end of the mirror assembly.

In one aspect of the invention, a laser mirror for a ring laser gyroscope includes a substrate; a first optical coating having a first index of refraction and a first wave thickness; a second optical coating having a second index of refraction and a second wave thickness; a first stack including the first and second optical coatings repeatedly deposited onto one another; a second stack including the first and second optical coatings repeatedly deposited onto one another, and at least one of either the first stack or the second stack is located on the substrate; and a third optical coating having the first index of refraction and a third wave thickness, which is greater than either of the first wave thickness or the second wave thickness, the third optical coating located between the first and second stacks such that the laser mirror poorly reflects a first predetermined wavelength emission while sufficiently reflecting a second predetermined wavelength emission.

In another aspect of the invention, a method of operating a laser mirror for a ring laser gyroscope includes arranging the laser mirror in the ring laser gyroscope to impede a laser path having a range of wavelength emissions, the laser mirror having a selectively configured optical coating located between a first stack and a second stack of optical coatings; substantially reflecting a first predetermined wavelength emission that is within the range of wavelength emissions; and substantially transmitting a second predetermined wavelength emission that is within the range of wavelength emissions.

### BRIEF DESCRIPTION OF THE DRAWINGS

The preferred and alternative embodiments of the present invention are described in detail below with reference to the following drawings:

FIGURE 1 is partial cross-sectional view of a laser mirror having at least three different optical coatings deposited on a substrate; and

FIGURE 2A shows a table listing selected properties of optical coatings that are used to build up a laser mirror.

FIGURE 2B shows a first chart derived from the table of FIGURE 2A, the first chart shows a high transmissivity of a 650 nanometer wavelength emission when the laser mirror has an intermediate optical coating with selected properties located within the laser mirror.

FIGURE 2C shows a second chart derived from the table of FIGURE 2A, the second chart shows a close up view of the respective reflectivity and transmissivity of a 633 and the 650 nanometer wavelength emissions.

### DETAILED DESCRIPTION OF THE PREFERRED EMBODIMENT

In the following description, certain specific details are set forth in order to provide a thorough understanding of various embodiments of the invention. In other instances, well-known structures and methods associated with ring laser gyroscopes (RLGs) and methods of making and/or assembling the same may not be shown or described in detail to avoid unnecessarily obscuring descriptions of the embodiments of the invention.

The following description generally relates to a type of laser mirror having an intermediate substance, such as a thicker optical coating, positioned within approximately a mid portion of the laser mirror for improving the performance of an RLG and specifically for improving the reflectance of at least a predetermined wavelength emission. The properties of the intermediate substance and its placement within the laser mirror results in the laser mirror sufficiently reflecting a first predetermined laser emission wavelength at or near 633 nanometers while poorly reflecting a second predetermined laser emission wavelength at or near 650 nanometers, which in turn improves the overall performance of the RLG.

Laser mirrors are produced with built-up deposits of glass like substances or coatings, hereinafter referred to as optical coatings. For example, one type of laser mirror includes high refractive index optical coatings and low refractive index optical coatings deposited onto a substrate to form a mirror stack. In order to achieve the poor reflectance effect for the 650 nanometers laser emission wavelength, a thicker intermediate coating is introduced into about the middle portion of the mirror stack, for example somewhere between the one-third to the two-thirds level of the mirror stack.

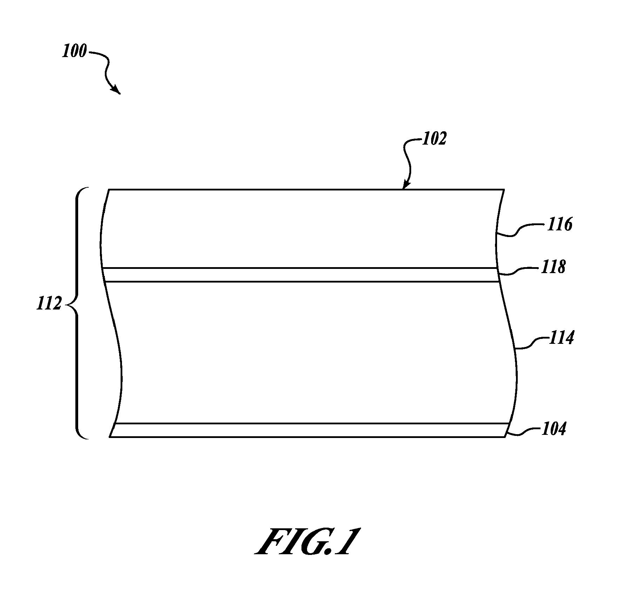

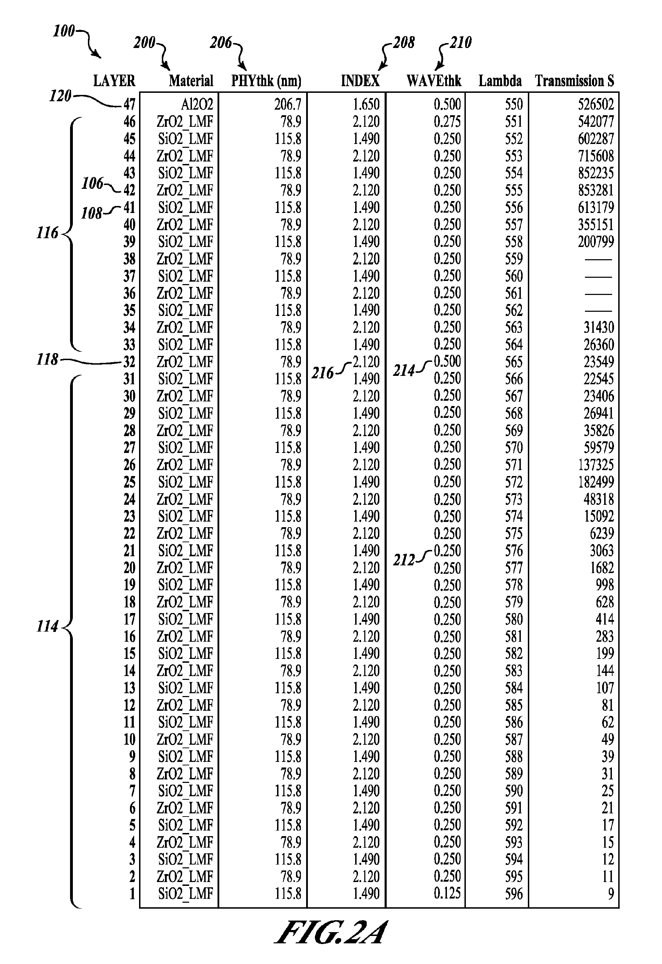

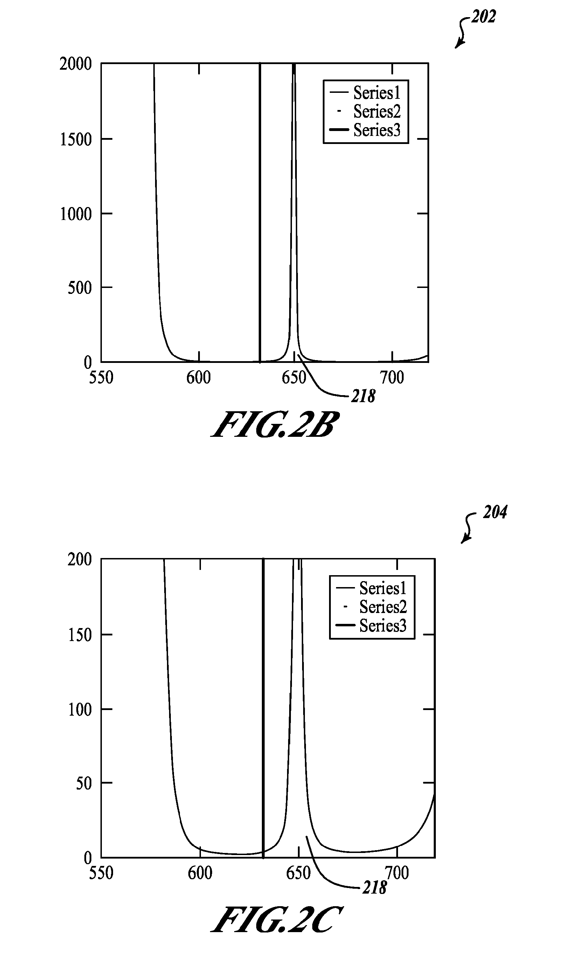

FIGURE 1 shows a laser mirror 100 having a top surface 102. The laser mirror 100 is formed by repeatedly depositing high-index and low-index optical coatings on a substrate 104. The deposition process may be a chemical vapor deposition process, a physical vapor deposition process, or some equivalent technique.. By way of example and as best shown in FIGURE 2A, the laser mirror 100 is formed by depositing a Zirconium Oxide (ZrO2) high-index optical coating 106 (FIGURE 2) onto a Silicon Dioxide (SiO₂) low-index optical coating 108 (FIGURE 2). The high-index optical coating 106 deposited onto the low-index optical coating is referred to as a pair or layer 110 (FIGURE 2) while the overall assembly is referred to as a mirror stack 112. The mirror stack 112 includes at least a first stack 114, a second stack 116, an intermediate coating 118, and the substrate 104.

FIGURE 2A shows a table 200 that illustrates the properties of the above-described laser mirror 100. The table 200 identifies one exemplary embodiment of the laser mirror 100 with layers 110 of optical coatings 106, 108. In addition, FIGURES 2B and 2C show a first chart 202 and a second chart 204 depicting the reflectivity and transmissivity of a range of selected wavelength emissions. The second chart 204 is a close up view of the first chart 202 to better show the reflectivity and transmissivity of the 633 and the 650 nanometer wavelength emissions. The table and chart data are explained in greater detail below.

The table 200 lists a first optical coating 106 and a second optical coating 108 in the mirror stack 112, each optical coating has a corresponding physical thickness shown in column 206, an index of refraction shown in column 208, and a wave thickness shown in column 210. In the illustrated embodiment, the laser mirror 100 in the table 200 further includes the substrate 104 and a top surface coating 120 along with its respective properties.

The first stack 114 is formed on the substrate 104 and the intermediate optical coating 118 is located on the first stack 114 in approximately a mid-region of the mirror stack 112. However, the intermediate coating 118 may be located approximately between the one-third and the two-thirds level of the mirror stack 112, and preferably between the half-level and the two-thirds level. The second stack 116 is located on the intermediate optical coating 118. In one embodiment, the top surface coating 120 is made from a third material such as a metal oxide material. In one embodiment, the third material is Aluminum Oxide (AL₂O₂) and is located on the second stack 116. The top surface coating 120 functions as the top surface 102 of the laser mirror 100.

As is generally understood in the art, the wave thickness shown in column 210 of the optical coatings 106, 108 is measured at a design angle, which is typically in the range of about 20 -45 degrees, and preferably about 30 degrees. In the illustrated embodiment of the laser mirror 100 arranged in table 200, most of the optical coatings 106, 108 have a quarter-wave thickness 212 while the intermediate coating 118 has a half-wave or multiple half-wave thickness 214 measured at a design angle of about 30 degrees and at 650 nanometers.

Charts 202, 204 of FIGURES 2B and 2C show the transmissivity of the laser mirror 100 as provided in the table 200. The charts 202, 204 show a negligible transmissivity at a 633 nanometers wavelength emission and a high transmissivity at a 650 nanometer wavelength emission. Conversely stated, the charts 202, 204 show a high reflectivity of the 633 nanometers wavelength emission and a low to near zero reflectivity of the 650 nanometer wavelength emission. As a result of the intermediate coating 118, its wave thickness 214, its index of refraction 216, and its position within the mirror stack 112 , the 650 nanometer wavelength emission is transmitted, absorbed, or likely a combination of both, such that the 650 nanometer wavelength emission is poorly reflected from the mirror stack 112. The charts 202, 204 show that the properties and location of the intermediate coating 118 results in a transmissivity "notch" 218 at the 650 nanometer wavelength emission. The intermediate coating 118 may have a half-wave or multiple half-wave thickness. In addition, the laser mirror 100 substantially reduces interference between the 650 nanometers laser wavelength emission and the 633 nanometers laser wavelength emission and improves the overall performance of the ring laser gyroscope.

In sum, the laser mirror 100 has a high reflectivity at the 633 nanometer wavelength emission, where essentially all the 633 nanometer wavelength emission is reflected. Likewise, the laser mirror 100 transmits and absorbs, but mostly transmits, nearly all of the 650 nanometer wavelength emission.

These and other changes can be made in light of the above detailed description. In general, in the following claims, the terms used should not be construed to limit the invention to the specific embodiments disclosed in the specification and the claims, but should be construed to include all types of ring laser gyroscopes and components thereof, to include but not limited to laser mirrors that operate in accordance with the claims.

Other types of coatings, having other properties such as the type of material, thickness, and/or index of refraction, as well as a different type of intermediate coating of a different material, thickness, index of refraction, and arranged in a different location in the mirror stack, can be configured to achieve a similar advantage as the laser mirror described above.

The embodiments of the invention in which an exclusive property or privilege is claimed are defined as follows:

## Claims

**1.** A ring laser gyroscope comprising:
a housing; and
a mirror having a plurality of optical coatings arranged on a substrate, at least one optical coating having selected properties and arranged among the plurality of optical coatings such that a first predetermined wavelength emission is sufficiently reflected by the mirror while a second predetermined wavelength emission is poorly reflected by the mirror.

**2.** The ring laser gyroscope of Claim 1, wherein the first predetermined wavelength emission is about a 633 nanometer wavelength emission.

**3.** The ring laser gyroscope of Claim 1, wherein the second predetermined wavelength emission is about a 650 nanometer wavelength emission.

**4.** A laser mirror for a ring laser gyroscope comprising:
a substrate;
a first optical coating having a first index of refraction and a first wave thickness;
a second optical coating having a second index of refraction and a second wave thickness;
a first stack including the first and second optical coatings repeatedly deposited onto one another;
a second stack including the first and second optical coatings repeatedly deposited onto one another, and at least one of either the first stack or the second stack is located on the substrate; and
a third optical coating having the first index of refraction and a third wave thickness, which is greater than either of the first wave thickness or the second wave thickness, the third optical coating located between the first and second stacks such that the laser mirror poorly reflects a first predetermined wavelength emission while sufficiently reflecting a second predetermined wavelength emission.

**5.** The laser mirror of Claim 4, wherein a physical thickness of the first optical coating is less than a physical thickness of the second optical coating.

**6.** The laser mirror of Claim 4, wherein a thickness of the first stack is greater than a thickness of the second stack.

**8.** A method of operating a laser mirror for a ring laser gyroscope, the method comprising:
arranging the laser mirror in the ring laser gyroscope to impede a laser path having a range of wavelength emissions, the laser mirror having a selectively configured optical coating located between a first stack and a second stack of optical coatings;
substantially reflecting a first predetermined wavelength emission that is within the range of wavelength emissions; and
substantially transmitting a second predetermined wavelength emission that is within the range of wavelength emissions.

**9.** The method of Claim 8, wherein substantially reflecting the first predetermined wavelength emission includes substantially reflecting a 633 nanometer wavelength emission.

**10.** The method of Claim 8, wherein substantially transmitting the second predetermined wavelength emission includes substantially transmitting and partially absorbing a 650 nanometer wavelength emission.
